Europäisches Patentamt

European Patent Office

Office européen des brevets

(11) Publication number: **0 408 898 A2**

# EUROPEAN PATENT APPLICATION

(21) Application number: **90111285.4**

(51) Int. Cl.5: **B29B 15/10**

(22) Date of filing: **15.06.90**

(30) Priority: **18.07.89 NL 8901844**

(43) Date of publication of application:
**23.01.91 Bulletin 91/04**

(84) Designated Contracting States:
**DE ES FR GB IT NL**

(71) Applicant: **GENERAL ELECTRIC COMPANY**
**1 River Road**
**Schenectady New York 12305(US)**

(72) Inventor: **De Jager, Marinus**
**General Electrics Plastics B.V.**
**P.O.Box 117, NL-4600 AC Bergen op**
**Zoom(NL)**
Inventor: **Moessner, Eugen karl**
**General Electrics Plastics B.V.**
**P.O.Box 117, NL-4600 AC Bergen op**
**Zoom(NL)**

(74) Representative: **Schüler, Horst, Dr. et al**
**General Electric Praunheimer Landstrasse**
**50**
**D-6000 Frankfurt 90(DE)**

(54) Method of manufacturing fibrereinforced laminates of thermoplastic synthetic resin, as well as products obtained by using the method.

(57) A novel process has been developed enabling the manufacture of shaped articles out of fibre reinforced thermoplastics. The process enables the incorporation of major amount of glass fibres by first manufacturing a flat sheet out of one or more layers of reinforcing fibres and one or more layers of fibres out of the thermoplastic resin. In a subsequent step the obtained flat sheet is pressed into a shaped article.

EP 0 408 898 A2

# METHOD OF MANUFACTURING FIBRE-REINFORCED LAMINATES OF THERMOPLASTIC SYNTHETIC RESIN, AS WELL PRODUCTS OBTAINED BY USING THE METHOD

The invention relates to a method of manufacturing a shaped article of fibre-reinforced thermoplastic resin.

A method for forming such articles has been described in French patent 1.147.991. According to this known art at least one layer of reinforcing fibres and at least one layer of thermoplastic fibres are superposed and laid into a heating press. The heating press has a configuration resulting, after heating and pressing, into the desired shape of the article to be manufatured. This process is suitable only for materials having "a minor content of reinforcing fibres and a major content of thermoplastic fibres". At higher contents of reinforcing fibres problems occur with the wetting of their reinforcing fibres.

The present invention deals with a process enabling the manufacture of shaped articles having even a major content of reinforcing fibres, of more than 50% by weight up to about 85% by weight.

In the method according to the invention the thermoplastic resin in the form of at least one layer of non-woven fibre product is combined with at least one layer of reinforcing fibres and the layers are combined into a flat sheet by using thermal energy and pressure, whereupon the flat sheet is pressed into a shaped article. This can be done either in a heated tool or in a cold tool after preheating.

This method has several advantages. It is to be noted in particular that the method is simple to perform and that the thickness of the resulting laminate per unit by weight can be readily controlled by using the method.

The non-woven fibre product of the thermoplastic resin further serves only as an intermediate product, so that the cohesion of the fibres is not too critical.

As thermoplastic resins may be chosen, for example, polyalkenes (for example, the various types of polyethene, polypropene, polystyrene), polycarbonates, polyether imides, polyesters (for example, polyethylene terephthalate or polybutylene terephthalate), polyphenylene ethers, thermoplastic elastomers, rubber-modified polymers, on the basis of styrene, for example, HIPS and ABS or mixtures of one or more of these polymers.

The processing to form non-woven fibre products is done in a manner known per se by spinning and laying the fibres as a mat or felt. Long or short fibres may optionally be manufactured, short fibres being preferred.

In the case of long fibres the polymer may be extruded in the conventional manner through a spin-die and the fibres may be stretched and be laid as a non-woven mat. After this they are usually calendered. Short fibres may suitably be formed by means of the so-called blast spinning process. In this process the polymer is spun while blowing with hot air, after which the emanating material is cooled directly with cold air. As a result of this a flow of short fibres is formed which are laid on a drum while forming a non-woven mat of fibres or felt.

The flow of short fibres may alternatively be provided directly on the layer of reinforcing fibres. It is also possible to spin the fibres from a solution, the solution being subjected to a rapid evaporation. Short fibres are obtained in this manner also, but this method is to be preferred less because in this case solvent has to be removed or recovered.

The reinforcing fibres used may be the conventionally used fibres, in particular glass, aramide and carbon. The reinforcing fibres may be formed to a fabric or a knitting. It is also possible to use the reinforcing fibres in the form of a non-woven of continuous or short fibres.

The manufacture of the present laminates is extremely simple and this is one of the most important advantages of the present invention.
The desired number of layers of non-woven fibre product of the thermoplastic resin and reinforcing fibres are simply laid one on top of the other, the layers are heated to the melting-point of the thermoplastic material, the assembly is compressed into a flat sheet press to obtain a compacted material and the assembly is then allowed to cool, by preference under pressure to a temperature below the Tg value of the thermoplastic material.

The pressing into flat sheet can also be easily performed continuously in a so called double belt press or in a calendering system.

The obtained flat sheet is subsequently pressed into a shaped article eg. a container and the like. For this shaping step one usually applies heat and pressure. The pressure can be lower than the pressure required in the first step. The temperatures in the second step can be the same or slightly below the temperatures as used in the first step.

As compared with the known method of manufacturing laminates, the present method has several advantages. As already stated, the resin content of the reinforcing fibres can be increased to above 50% by weight, resulting in structures of much higher strength and stiffness than those mentioned in the French patent 1.147.991.

## EXAMPLES

Two different flat sheets were manufactured by pressing together 2 (two) layers of reinforcing glass fibres in the form of woven fabric and 3 (three) layers of polypropylene fibres and polybutylene tereftalate (PBT) fibres in the form of a non-woven structure respectively. The placement of the layers was: a layer of polypropylene fibres (or PBT fibres), a layer of reinforcing glass fabric, a layer of polypropylene fibres (or PBT fibres), a layer of reinforcing glass fabric, a layer of polypropylene fibres (or PBT fibres). The fibres of polypropylene and PBT had been obtained by melt blow spinning. The layers were compressed under a pressure of 7 bar at $220^{\circ}$C (for the polypropylene) and $270^{\circ}$C (for the PBT) in a double belt press into a flat sheet with a thickness of 0.45mm.

The overall glass fibres content was 80% by weight and 70% by weight for the sheet with polypropylene and PBT fibres respectively.

The obtained flat sheet was pressed into a container with a depth of 25 to 75mm, a width of 100mm and a length of 200mm, by first preheating the sheet in an infrared oven, 1 minute at $200^{\circ}$C and 1 minute at $250^{\circ}$C for the polypropylene based sheet and the PBT based sheet respectively, and then after transferring the heated sheet to a cold tool by pressing in this tool under a pressure of 4 bar.

The obtained product showed a good surface without protruding glass fibres. Physical examination revealed a complete wetting of the glass fibres.

## Claims

1. A method of manufacturing a shaped article of fibre-reinforced thermoplastic resin, wherein the thermoplastic resin in the form of at least one layer of non-woven fibre product is combined with at least one layer of reinforcing fibres and the layers are combined into a flat sheet by using thermal energy and pressure, whereupon the flat sheet is pressed into a shaped article.

2. Method as claimed in claim 1 wherein the content of reinforcing fibres is above 50% weight with respect to the sum of the quantity by weight of the reinforcing fibres and the thermoplastic resin.

3. A method as claimed in Claim 1, wherein a non-woven fibre product having short fibres is used.

4. A method as claimed in Claim 3, wherein a fibre product is used which has been obtained by blast spinning.

5. A method as claimed in Claims 1-4, wherein a polyalkene, polycarbonate, polyether imide, polyester, polyphenylene ether, thermoplastic elastomer, rubber-modified polymer on the basis of styrene or a mixture of one or more of these polymers is used as a thermoplastic resin.

6. A method as claimed in Claims 1-5, wherein reinforcing fibres of glass, aramide or carbon are used.

7. A method as claimed in Claim 6, wherein reinforcing fibres in the form of a fabric or knitting or in the form of a non-woven are used.

8. Products obtained while using the method as claimed in one or more of the preceding Claims.